# EUROPÄISCHE PATENTSCHRIFT

(11) **EP 3 290 754 B1**
(45) Veröffentlichungstag und Bekanntmachung des Hinweises auf die Patenterteilung: **14.06.2023**
(21) Anmeldenummer: 16186400.4
(22) Anmeldetag: 30.08.2016
(51) Int. Cl.: F16J 15/02, F16J 15/12, F16L 23/18

(54) **FLACHDICHTUNG WEICHSTOFFDICHTUNG MIT RANDEINFASSUNG**
SOFT MATERIAL SEAL WITH SURROUND
PRODUIT D'ÉTANCHEITE COMPRESSIBLE À BORDURE

(43) Veröffentlichungstag der Anmeldung: 07.03.2018
(60) Teilanmeldung: 23170972.6
(73) Patentinhaber: Frenzelit GmbH, 95460 Bad Berneck i.F. (DE)
(72) Erfinder: Steinert, Theresa, 95195 Röslau (DE); Will, Andreas, 95686 Fichtelberg (DE)
(74) Vertreter: Becker Kurig & Partner Patentanwälte mbB

(56) Entgegenhaltungen:
- EP-A1- 0 486 975
- EP-A1- 0 939 263
- DE-A1- 2 019 477
- DE-A1- 3 101 921
- DE-A1- 3 618 786
- DE-A1- 3 809 690
- DE-A1- 10 316 262
- DE-A1- 19 804 289
- DE-U1- 20 204 054
- US-A- 5 772 215
- US-B1- 6 845 983
- Poeschel Eva ET AL: "Asbestersatzstoff-Katalog Band 6: Dichtungen" In: "Dichtungen", 1 October 1985 (1985-10-01), Hauptverband der gewerblichen Berufsgenossenschaften e.V., Essen, XP055827000, ISBN: 978-3-88383-118-3 vol. 6, pages 1-96,
- Sgl Carbon Gmbh: "Sigrflex Economy - Expanded Graphite" In: "Sigrflex Economy - Expanded Graphite", 1 January 2011 (2011-01-01), SGL Carbon GmbH, Germany, XP055827032, vol. 3, pages 1-4,
- Sgl Carbon Gmbh: "Sigraflex Hochdruck - Expanded Graphite" In: "Sigraflex Hochdruck - Expanded Graphite", 1 January 2011 (2011-01-01), SGL Carbon GmbH, Germany, XP55827030, vol. 3, pages 1-6,

## Beschreibung

### Hintergrund der Erfindung

Die vorliegende Erfindung betrifft ein Rohrflanschsystem mit einer Rohrflanschweichstoffdichtung, die eine Weichstoffdichtung mit einer Randeinfassung enthält, und eine Verwendung der Rohrflanschweichstoffdichtung, wobei die Randeinfassung aus einem Metall-Polymer-Kompositwerkstoff gebildet ist.

### Beschreibung des Standes der Technik

Weichstoffdichtungen (auch Flachdichtungen genannt) finden in vielen Gebieten der Industrie und der Automobiltechnik (Getriebe, Ölwanne, Achsen, Kühler, Saugrohr etc.) Anwendung. Insbesondere sind Weichstoffdichtungen als Deckelabdichtungen, Filterdichtungen, in Getrieben, Kompressoren, Pumpen und Motoren aller Art sowie in industriellen Großanlagen als Flansch- oder Deckeldichtungen im Einsatz. Eine beispielhafte Offenbarung für die Zusammensetzung von Weichstoffdichtungswerkstoffen ist in der Europäischen Patentschrift mit der Veröffentlichungsnummer EP 0 734 472 B1 bereitgestellt, die in ihrer Gesamtheit und insbesondere mit ihrer Beschreibung auf Seite 3, Zeile 1 bis Seite 4, Zeile 32 und Tabelle 1 der Patentoffenlegungsschrift in dieser Beschreibung aufgenommen ist. Gleiches gilt für die Offenbarung in [0021]-[0025] der EP 1 293 709 A1 und Seite 9, Zeile 12 bis Seite 11, Zeile 19 der und Beispiele 1-3 der DE 3232255 A1. Weitere Ausführungsformen für die Weichstoffmaterialzusammensetzung sind in den Beispielen dieser Beschreibung angegeben. Jedoch sollte die genaue Zusammensetzung der Weichstoffdichtung der vorliegenden Erfindung nicht eingeschränkt werden, da die Anzahl möglicher Inhalts- und Zusatzstoffe nahezu unmöglich komplett anzugeben ist und für die Funktion der vorliegenden Erfindung im Wesentlichen unerheblich ist.

Metallische Einfassungen für Weichstoffdichtungen werden für viele Dichtungsanwendungen eingesetzt, um folgende Vorteile zu erzielen:
- Abschirmung des Dichtungsquerschnitts gegen das Medium
- Verhinderung von Kontaminationen des Mediums durch Herauslösung von Dichtungsbestandteilen
- Abschirmung, um Eindringen des Mediums in das Dichtungsmaterial zu vermeiden (in der Praxis lässt sich eine vollständige Abschirmung gegen das Medium in den seltensten Fällen realisieren)
- Mechanische Verstärkung der Dichtung
- Schutz vor Herausdrücken der Dichtung
- Erhöhung der mechanischen Stabilität

Diese theoretischen Vorteile von metallischen Randeinfassungen bei Weichstoffdichtungen haben dazu geführt, dass einige Standards bestimmter Anwendungen eine metallische Randeinfassung vorschreiben. Jedoch weisen metallische Einfassung in der Praxis erhebliche Nachteile auf. Generell muss eine Weichstoffdichtung verpresst werden, damit Dichtheit erreicht werden kann. In der Regel gilt: je mehr Flächenpressung vorhanden ist, desto dichter wird das System.

Eine metallische Einfassung beeinflusst die Leckage einer Weichstoffdichtung jedoch aus folgenden Gründen negativ:
- Metall verformt sich beim Einbau nicht, bzw. nur geringfügig. Die Weichstoffdichtung wird weniger stark verpresst, da die metallische Einfassung einen Großteil der Verformungskraft/Verpressungskraft in Anspruch nimmt;
- Durch die reduzierte Verpressungskraft resultiert eine erhöhte Oberflächenleckage (Dichtung kann sich nicht mehr so gut an Oberflächenrauigkeiten anpassen) und Querschnittsleckage (Dichtung wird nicht mehr so stark verpresst - höherer Porenanteil)
- Dieser Effekt lässt sich bei allen Weichstoffdichtungen feststellen, egal auf welchem Material die Weichstoffdichtung basiert (z.B. Graphit-Weichstoffdichtung, Faser-Weichstoffdichtung, Glimmer-Weichstoffdichtung etc.)

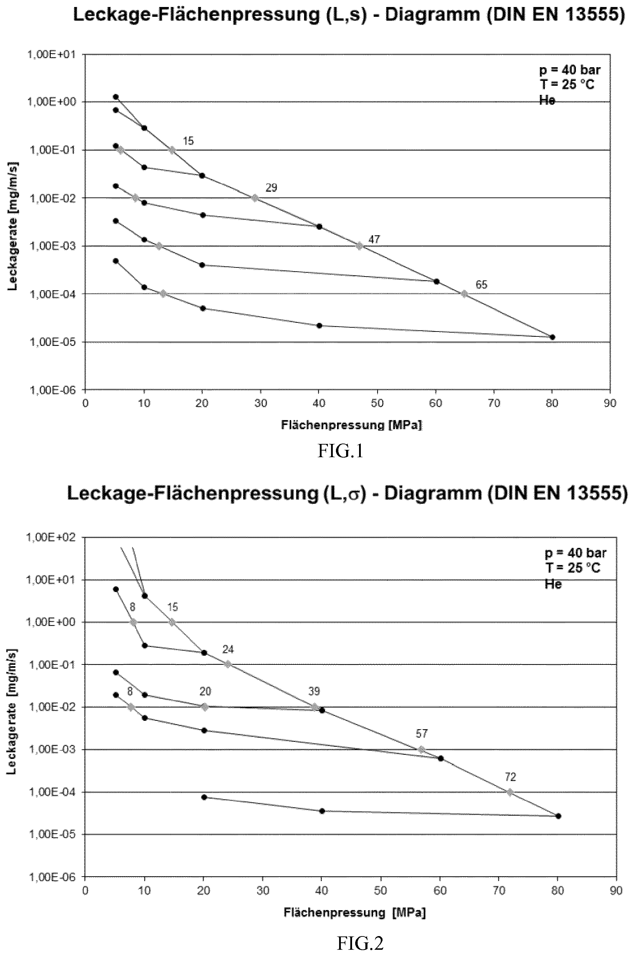

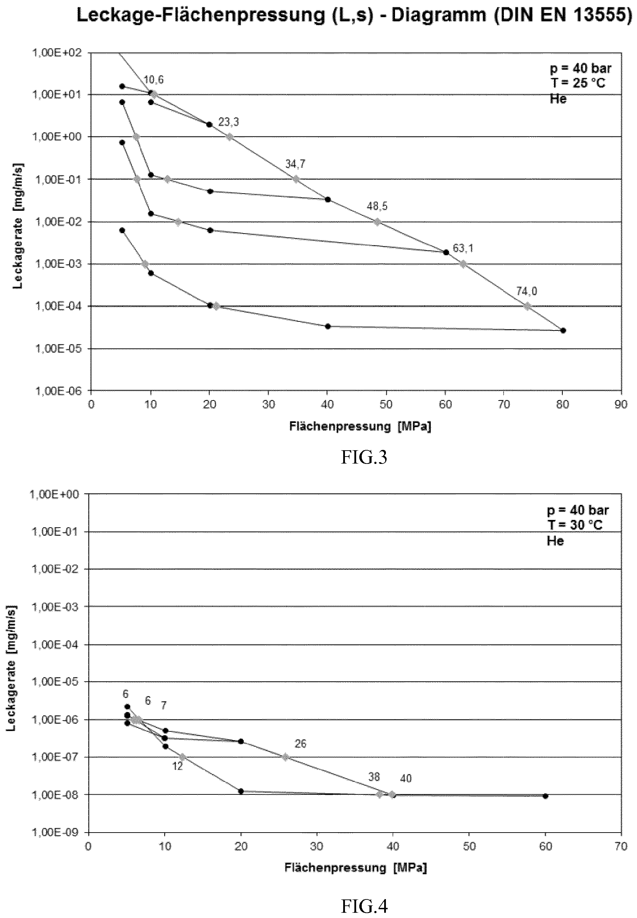

Fig. 1 bis Fig. 3 zeigen Diagramme der Leckrate bzw. Leckagerate in mg/m/s (Emissionsrate) in Abhängigkeit von der Flächenverpressung (in MPa) unterschiedlicher Weichstoffdichtungen bei einem Innendruck von 40 bar und einer Temperatur von 25°C für Helium gezeigt (entspricht der Norm DIN EN 13555). Fig. 1 zeigt dabei ein Leckagediagramm einer handelsüblichen Faserweichstoffdichtung ohne Randeinfassung, Fig. 2 ein Leckagediagramm einer handelsüblichen Faserweichstoffdichtung mit metallischer Innen-Einfassung mit einer Blechstärke von 0,10 mm und Fig. 3 ein Leckagediagramm einer handelsüblichen Faserweichstoffdichtung mit einer metallischen Innen-Einfassung mit einer Blechstärke von 0,15 mm.

Mit Bezug auf Fig. 3 wird üblicherweise eine 0,15 mm starke Einfassung verwendet. Diese bewirkt eine starke Verschlechterung des Leckageverhaltens (benötigte Flächenpressung um Leckagerate 1,0E-02 zu erreichen: 49 MPa, statt wie bei Variante ohne metallische Einfassung bei 29 MPa).

Um diesen negativen Einfluss abzuschwächen, kommt es vermehrt zum Einsatz einer dünneren Einfassung (0,10 mm statt wie üblich 0,15 mm, Fig. 2). Diese besitzt zwar im Vergleich zur stärkeren Einfassung ein besseres Leckageniveau, im Vergleich zu einer Dichtung ohne metallische Einfassung ist jedoch eine deutliche Verschlechterung der Leckage feststellbar (benötigte Flächenpressung um Leckagerate 1,OE-02 zu erreichen: 39 MPa, statt wie bei ungebördelter Variante bei 29 MPa).

Eine dünnere Einfassung (0,10 mm) schwächt die Leckageverschlechterung im Vergleich zur Standard-Einfassung ab. Gleichzeitig wird jedoch der Vorteil der "mechanischen Verstärkung" reduziert. Folglich muss aktuell immer ein Kompromiss zwischen "mechanischer Verstärkung" und "Leckageverschlechterung" eingegangen werden, wie in Fig. 1-3 zu erkennen ist.

US 6 845 983 B1 betrifft die Vibrationsdämpfung bei Wellringdichtungen. Die Dichtung dient zum Abdichten von Flanschverbindungen in Rohrleitungssystemen, wobei eine Eigenfrequenz der Dichtung geändert wird, um eine Resonanz in der Flanschverbindung zu vermeiden. Die Dichtung umfasst eine Platte, die eine Öffnung für den Durchtritt von Medien durch die Flanschverbindung abdichtet.

EP 0 939 263 A1 offenbart Dichtungen, die dazu bestimmt sind, zwischen zwei Anschlussflanschen von Rohrleitungen eingespannt zu werden. Insbesondere wird eine Möglichkeit zur Zentrierung von Metall-/ Semimetalldichtungen, wie z.B. Wellring-, Kammprofil- und metallummantelten Dichtungen gezeigt.

DE 36 18 786 A1 offenbart eine Flachdichtung für Verbrennungskraftmaschinen, wie insbesondere eine Zylinderkopfdichtung oder eine Auspuffflanschdichtung, mit einer metallischen Einfassung mindestens einer Durchgangsöffnung und einer Gleitbeschichtung der Einfassungsschenkel aus einem Festschmierstoff und einem polymeren Bindemittel.

DE 31 01 921 A1 offenbart eine Flachdichtung, insbesondere eine Zylinderkopfdichtung aus imprägniertem Asbestfaservlies, mit mindestens einer Bewehrung der Brennraumöffnung aus einer im Querschnitt etwa U - förmig über den Rand gebogenen Einfassung.

EP 0 486 975 A1 offenbart eine Zylinderkopfdichtung, deren flacher Grundkörper aus Weichstoffmaterial im Bereich der Brennraumdurchbrüche mit einem U-förmigen Metallbördel eingefaßt ist.

DE 198 04 289 A1 offenbart eine Flachdichtung einem Innen- oder einem Außenbördel oder aus mindestens einem Innen und einem Außenbördel und einem Dichtungskörper, wobei der Innenbördel jeweils am Übergang zu jedem der durch die Dichtung abzudichtenden Hohlräume positioniert ist und bei der der den mindestens einen Bördel aufweisende Dichtungskörper aus einem druckfesten Kern, der gegenüber Temperaturen von mindestens 150 °C dauerbeständig ist und aus einem Belag, der sich auf den beiden flachen Außenseiten des Kerns befindet, besteht.

DE 202 04 054 U1 offenbart eine Flachdichtung aus einer Grundkörperplatte, welche einen mindestens eine Durchströmöffnung begrenzenden Innenbördel mit die Grundkörperplatte teilweise überlappenden Schenkeln aufweist, wobei.der Innenbördel aus einem homogenen, porenfreien Polytetrafluorethylen besteht, dass die Grundkörperplatte aus einem eine Faserstruktur aufweisenden porigen virginalen PTFE besteht, und dass zwischen den Berührungsflächen beider PTFE- Werkstoffe eine innige, thermisch erzeugte Verbindung besteht.

DE 103 16 262 A1 offenbart eine Flachdichtung für Flanschverbindungen, bestehend aus einem dicken flächigen druckfesten Kern aus mindestens einer Lage Graphitfolie mit einem Flächengewicht von maximal 1500 g/m², der zwischen zwei Metallfolien eingebettet ist, deren dem Kern abgewandten Oberflächen mit Auflageschichten aus Graphitfolie mit einem Flächengewicht von maximal 350 g/m² bedeckt sind.

DE 20 19 477 A1 offenbart einen Flachdichtungsring für Motoren, die das Anhaften der versiegelten Oberflächen verhindern kann.

### Kurze Beschreibung der Erfindung

Um die oben beschriebenen Nachteile im aktuellen Stand der Technik auszuräumen, stellt die vorliegende Erfindung ein verbessertes Rohrflanschsystem und eine Verwendung einer Weichstoffdichtung bereit. Die vorliegende Erfindung wird dabei durch die beigefügten Ansprüche bereitgestellt.

Demgemäß stellt die vorliegende Offenbarung ein Rohrflanschsystem gemäß dem Anspruch 1 und eine Verwendung einer Rohrflanschweichstoffdichtung in einem Rohrflanschsystem gemäß dem Anspruch 8 bereit.

In einem Beispiel der Offenbarung der Weichstoffdichtung ist die Metalllage der Randeinfassung zwischen dem Weichstoffmaterial der Weichstoffdichtung und der Polymerlage angeordnet.

In einem Beispiel der Offenbarung der Weichstoffdichtung ist die Polymerlage die äußerste Lage der Randeinfassung der Weichstoffdichtung und steht im eingebauten Zustand in direktem Kontakt zu einer abzudichtenden Fläche.

In einem Beispiel der Offenbarung der Weichstoffdichtung umfasst das Weichstoffmaterial ein Material, das ausgewählt ist aus der Gruppe, bestehend aus Graphit, Glimmer, insbesondere Phlogopit-Glimmer, Muskovit-Glimmer, oder Vermiculite, Aramidfasern, Nitril-Butadien-Kautschuk (NBR-Kautschuk), Polytetrafluorethylen (PTFE), Fluorkarbon-Kautschuk bzw. Fluorkautschuk (FKM, veraltet auch FPM) und einer Kombination dieser Materialien.

In einem Beispiel der Offenbarung der Weichstoffdichtung umfasst die Metalllage Edelstahl. In einer speziellen Ausführungsform besteht die Metalllage aus Edelstahl.

In einem Beispiel der Offenbarung der Weichstoffdichtung steht das Weichstoffmaterial der Weichstoffdichtung in direktem Kontakt zu einer abzudichtenden Fläche.

In einem Beispiel der Offenbarung der Weichstoffdichtung ist mindestens eine Randeinfassung ein Innenbördel oder ein Außenbördel. Es sei angemerkt, dass die Weichstoffdichtung gemäß der vorliegenden Erfindung auch eine Innen- und eine Außenrandeinfassung, z.B. einen Innen- und einen Außenbördel umfassen kann.

In einem Beispiel der Offenbarung der Weichstoffdichtung ist mindestens eine Randeinfassung aus einem Kompositblech gefertigt, das eine Metalllage umfasst, die mit einem Polymer beschichtet wurde. Die Polymerbeschichtung besteht aus FKM.

Mit Bezug auf Fig. 4, die ein Leckage-Flächenpressung-Diagramm einer erfindungsgemäßen Weichstoffdichtung mit einer Innenrandeinfassung aus einem Polymer-Metall-Kompositwerkstoff zeigt, ist die erfindungsgemäße Weichstoffdichtung in der Lage nicht nur die Nachteile herkömmlicher metallisch eingefasster Weichstoffdichtungen auszuräumen, sondern verbessert darüber hinaus auch die Dichtleistung einer entsprechenden Weichstoffdichtung ohne Metalleinfassung (siehe zum Vergleich Fig. 1).

Im eingebauten Zustand ist eine herkömmliche Randeinfassung nicht in der Lage sich ausreichend an Unebenheiten in der abzudichtenden Fläche anzupassen. Im Bereich der herkömmlichen Metalleinfassung selbst besteht demnach kaum eine Dichtwirkung. Zudem bildet die herkömmliche Randeinfassung auch eine Begrenzung für die mögliche Verpressungs- oder Kompressionstiefe des Weichstoffmaterials, da die Metalleinfassung nur bis zu einem gewissen Grad ohne Zerstörung verformbar ist.

In der vorliegenden Erfindung dient die Polymerschicht dazu die Anpassung an Unebenheiten der abzudichtenden Fläche im Bereich der Randeinfassung zu verbessern. Somit trägt die Randeinfassung selbst erheblich zu abdichtenden Wirkung der Weichstoffdichtung bei.

Die vorliegende Erfindung erreicht somit das, was die Entwicklung von Metalleinfassungen für Weichstoffdichtungen erst angetrieben hat, nämlich der Wunsch nach einer vorteilhaften Kombination einer guten Leckageleistung mit den Vorzügen einer erhöhten Stabilität und Schutz des Weichstoffmaterials durch die Metalleinfassung.

### Kurze Beschreibung der Zeichnungen

Fig. 1 ist ein Leckage-Flächenpressung-Diagramm einer herkömmlichen Faserweichstoffdichtung ohne Randeinfassung.
Fig. 2 ist ein Leckage-Flächenpressung-Diagramm einer herkömmlichen Faserweichstoffdichtung mit einer metallischen 0,10 mm Innenrandeinfassung.
Fig. 3 ist ein Leckage-Flächenpressung-Diagramm einer herkömmlichen Faserweichstoffdichtung mit einer metallischen 0,15 mm Innenrandeinfassung.
Fig. 4 ist ein Leckage-Flächenpressung-Diagramm einer erfindungsgemäßen Weichstoffdichtung mit einer Innenrandeinfassung aus einem Polymer-Metall-Kompositwerkstoff
Fig. 5 ist eine Perspektivansicht einer Weichstoffdichtung gemäß einer bevorzugten Ausführungsform der vorliegenden Erfindung.
Fig. 6 ist eine Querschnittsansicht entlang der Linie A der erfindungsgemäßen Weichstoffdichtung der Fig. 5.
Fig. 7 ist eine vergrößerte Ansicht des Abschnitts B in Fig. 6.

### Ausführliche Beschreibung der Ausführungsformen

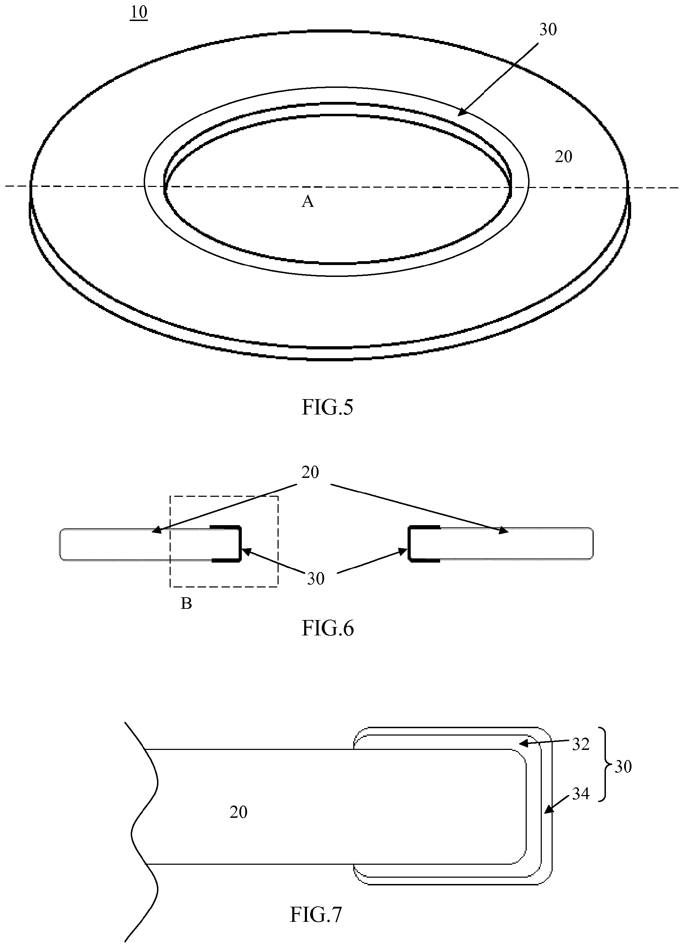

Fig. 5 ist eine Perspektivansicht einer Weichstoffdichtung gemäß einer bevorzugten Ausführungsform der vorliegenden Erfindung. Fig. 6 ist eine Querschnittsansicht entlang der Linie A der erfindungsgemäßen Weichstoffdichtung der Fig. 5. Fig. 7 ist eine vergrößerte Ansicht des Abschnitts B in Fig. 6.

Mit Bezug auf Fig. 5-7 umfasst eine Weichstoffdichtung 10 in einer bevorzugten Ausführungsform der vorliegenden Erfindung ein Weichstoffmaterial 20 in der Form eines flachen Rings und mindestens einer Randeinfassung 30, wobei die Randeinfassung 30 einen Metall-Kompositwerkstoff umfasst, der eine Metalllage 32 und eine Polymerlage 34 umfasst. Die Metalllage 32 der Randeinfassung 30 ist bevorzugt zwischen dem Weichstoffmaterial 20 und der Polymerlage 34 angeordnet, d.h. die Metalllage trennt das Weichstoffmaterial von der Polymerlage.

Die Polymerlage 34 ist weiterhin bevorzugt die äußerste Lage der Randeinfassung 30 und steht im eingebauten Zustand in direktem Kontakt zu einer abzudichtenden Fläche. Die abzudichtende Fläche ist dabei eine Flanschfläche (nicht gezeigt) im Apparatebau oder Rohrleitungsbau. Es sei weiterhin angemerkt, dass die Figuren lediglich beispielhaft eine Innenrandeinfassung einer Weichstoffdichtung zeigen. Eine entsprechende Randeinfassung kann stattdessen auch am Außenrand der Weichstoffdichtung vorgesehen sein oder es ist zugleich eine Innenrandeinfassung und eine Außenrandeinfassung gemäß der Erfindung vorgesehen. Die entsprechende Auswahl wird üblicherweise abhängig vom beabsichtigten Einsatzgebiet der Dichtung vorgesehen (welches Medium innen und außen vorliegt, Über- oder Unterdruck, Temperaturgradienten etc.).

In einer Ausführungsform weist die Weichstoffdichtung 10 wenigstens eine, bevorzugt wenigstens drei Öffnungen auf (nicht gezeigt), die zur Passage eines Befestigungselements, z.B. einen Bolzen eines Rohrflansches, dienen.

In einer Ausführungsform umfasst das Weichstoffmaterial ein Material, das ausgewählt ist aus der Gruppe, bestehend aus Graphit, Glimmer, insbesondere Phlogopit-Glimmer, Muskovit-Glimmer oder Vermiculite, Aramidfasern, Nitril-Butadien-Kautschuk, FKM, Polytetrafluorethylen (PTFE), expandiertes Polytetrafluorethylen (ePTFE) und einer Kombination dieser Materialien. Generell sind auch andere Materialien, die für Weichstoffdichtungen verwendbar sind, geeignet, um gemäß der vorliegenden Erfindung mit einer Metall-Polymer-Kompositrandeinfassung ausgestattet zu werden, je nach gewünschtem Anwendungsgebiet. Es sollte daher verstanden werden, dass die vorliegende Erfindung nicht auf eine spezielle Auswahl an Weichstoffmaterial einzuschränken ist.

Das Material für die Polymerlage 34 ist FKM. Es lässt sich mechanisch gut mit einer Metalllage 32 verbinden, ist flexibel genug, um sich schnell an Unebenheiten der abzudichtenden Fläche anzupassen und weist eine gute chemische Widerstandsfähigkeit auf. Ein Bevorzugtes Material für die Metalllage 32 ist Edelstahl. Jedoch sind je nach Anwendung auch andere widerstandsfähige Metalle oder Metalllegierungen als Ausgangsstoff für die Metalllage 32 der Randeinfassung 30 der vorliegenden Erfindung denkbar und die vorliegende Erfindung sollte nicht auf Edelstahl beschränkt werden.

In einer bevorzugten Ausführungsform ist die Randeinfassung 30 aus einem Kompositblech gefertigt, das eine Metalllage umfasst, die mit einem Polymer beschichtet wurde. Geeignete Beschichtungstechniken sind hinlänglich bekannt, z.B. Druckbeschichten des Fuorpolymers, erfindungsgemäß FKM, auf eine zuvor angeraute Fläche, etwa durch Sandstrahlen oder einen Ätzvorgang, oder ein Beschichten mittels einer elastischen Acryldispersionsbeschichtung.

Zusammengefasst ist eine herkömmliche Randeinfassung im eingebauten Zustand nicht in der Lage sich ausreichend an Unebenheiten in der abzudichtenden Fläche anzupassen. Im Bereich der herkömmlichen Metalleinfassung selbst besteht demnach kaum eine Dichtwirkung. Zudem bildet die herkömmliche Randeinfassung auch eine Begrenzung für die mögliche Verpressungs- oder Kompressionstiefe des Weichstoffmaterials, da die Metalleinfassung nur bis zu einem gewissen Grad ohne Zerstörung verformbar ist.

In der vorliegenden Erfindung dient die Polymerschicht dazu die Anpassung an Unebenheiten der abzudichtenden Fläche im Bereich der Randeinfassung zu verbessern. Somit trägt die Randeinfassung selbst erheblich zu abdichtenden Wirkung der Weichstoffdichtung bei.

### Beispiele

Im Allgemeinen werden folgende Werkstoffgruppen und Materialien zur Herstellung der Weichstoffdichtungen bzw. des Weichstoffmaterials der vorliegenden Erfindung verwendet:
- 0-100% Graphit - expandiert oder nicht expandiert, mit einem Reinheitsgrad von mindestens 80%
- 0-100% NBR - nicht hydriert oder in hydrierter Form (HNBR)
- 0-100% PTFE
- 0-95% Funktionsfüllstoffe
- 0-30% Aramidfasern
- 0-80% Edelstahl (in Form von Einlagen z.B. Streckmetall, Glattblech, Spießblech)
- 0-5% Kautschukchemikalien

Im Folgenden werden einige beispielhafte Rezepturen (in Gew.-%) angegeben, die jedoch nicht zur Beschränkung der vorliegenden Erfindung ausgelegt werden sollten. Die Variationsmöglichkeiten der einzelnen Bestandteile sind nahezu unbegrenzt und es ist daher unmöglich eine "Standardrezeptur" anzugeben.

Beispielbereiche für eine Faser-Weichstoffdichtung:
- 10-30 %, bevorzugt 15-25 %NBR
- 5-15 %, bevorzugt 8-12% Aramidfasern
- 58-73 %, bevorzugt 62-69 % Funktionsfüllstoffe (z.B. Siliciumdioxid, Bariumsulfat, Kaolin etc.)
- 0-12%, bevorzugt 1-8 % Kautschukchemikalien (z.B. Schwefel, Zinkoxid, MBT, ZBEC, TMTD, etc.)

Beispielbereiche für eine Graphit-Weichstoffdichtung :
- 60-90%, bevorzugt 70-85% expandierter Graphit, Reinheit 99%
- 10-40%, bevorzugt 15-30% Edelstahl (z.B. 1.4404 / AISI 316L)

Beispielbereiche für eine Graphit-Faser-Weichstoffdichtung:
- 5-35%, bevorzugt 15-25 % NBR
- 5-15 %, bevorzugt 8-12% Aramidfasern
- 5-15 %, bevorzugt 8-12% Funktionsfüllstoffe (z.B. Siliciumdioxid, Bariumsulfat, Kaolin etc.)
- 40-70%, bevorzugt 50-65 % Graphit, nicht expandiert, Reinheit 90%
- 0-15, bevorzugt 1-6 % Kautschukchemikalien (z.B. Schwefel, Zinkoxid, MBT, ZBEC, TMTD, etc.)

Beispielbereiche für eine Glimmer-Weichstoffdichtung:
- 80-98%, bevorzugt 85-95% Glimmer (Phlogopit)
- 2-20%, bevorzugt 5-15% Edelstahl

Eine beispielhafte technische Charakterisierung einer typischen Weichstoffdichtung gemäß der vorliegenden Erfindung ist im Folgenden bereitgestellt:
- Dichte: 0,50 - 2,0 g/cm³
- Dicke: 0,5 mm - 4,0 mm
- Kompressibilität (nach ASTM F 36 J): 2-50%.

Eine entsprechende technische Charakterisierung der metallischen Einfassung auf Basis Metall-Polymer-Kompositwerkstoff gemäß der vorliegenden Erfindung ist hier beispielhaft angegeben:
- Metallwerkstoff: Edelstahl (z.B. V2A oder V4A)
- Dicke Metall: 0,10 mm - 0,30 mm
- Polymerwerkstoff: Fluorkautschuk (FKM)
- Polymerschicht Dicke: 0,1 µm - 100 µm, bevorzugt 0,5µm - 30 µm.

## Patentansprüche

1. Rohrflanschsystem, umfassend:
einen Rohrflansch mit einer Flanschfläche; und
eine Rohrflanschweichstoffdichtung (10), umfassend:
ein Weichstoffmaterial (20) in der Form eines flachen Rings; und
mindestens eine Randeinfassung (30), wobei die Randeinfassung (30) einen Metall-Kompositwerkstoff umfasst, der eine Metalllage (32) und eine Polymerlage (34) umfasst, wobei die Polymerlage in direktem Kontakt zur Flanschfläche steht, **dadurch gekennzeichnet, dass** das Polymer der Polymerlage (34) aus Fluorkautschuk besteht.

2. Rohrflanschsystem gemäß Anspruch 1, wobei das Weichstoffmaterial (20) ein Material umfasst, das ausgewählt ist aus der Gruppe, bestehend aus Graphit, Glimmer, insbesondere Phlogopit-Glimmer, Aramidfasern, Nitril-Butadien-Kautschuk, Polytetrafluorethylen, PTFE, expandiertes Polytetrafluorethylen, ePTFE, und einer Kombination dieser Materialien.

3. Rohrflanschsystem gemäß Anspruch 1 oder 2, wobei die Metalllage (32) der Randeinfassung (30) zwischen dem Weichstoffmaterial (20) der Weichstoffdichtung (10) und der Polymerlage (34) angeordnet ist.

4. Rohrflanschsystem gemäß einem der vorstehenden Ansprüche, wobei die Polymerlage (34) die äußerste Lage der Randeinfassung (30) der Weichstoffdichtung (10) ist.

5. Rohrflanschsystem gemäß einem der vorstehenden Ansprüche, wobei die Metalllage (32) Edelstahl umfasst.

6. Rohrflanschsystem gemäß einem der vorstehenden Ansprüche, wobei die mindestens eine Randeinfassung (30) ein Innenbördel oder ein Außenbördel ist.

7. Rohrflanschsystem gemäß einem der vorstehenden Ansprüche, wobei die mindestens eine Randeinfassung (30) aus einem Kompositblech gefertigt ist, das eine Metalllage (32) umfasst, die mit einem Polymer (34) beschichtet wurde.

8. Verwendung einer Rohrflanschweichstoffdichtung (10) in einem Rohrflanschsystem, wobei das Rohrflanschsystem umfasst:
einen Rohrflansch mit einer Flanschfläche; wobei
die Rohrflanschweichstoffdichtung (10), umfasst:
ein Weichstoffmaterial (20) in der Form eines flachen Rings; und
mindestens eine Randeinfassung (30), wobei die Randeinfassung (30) einen Metall-Kompositwerkstoff umfasst, der eine Metalllage (32) und eine Polymerlage (34) umfasst, wobei die Polymerlage in direktem Kontakt zur Flanschfläche steht, **dadurch gekennzeichnet, dass** das Polymer der Polymerlage (34) aus Fluorkautschuk besteht.

## Claims

1. A pipe flange system comprising:
a pipe flange having a flange surface; and
a pipe flange soft material seal (10) comprising:
a soft material (20) in the form of a flat ring; and
at least one surround (30), the surround (30) comprising a metal composite material comprising a metal layer (32) and a polymer layer (34), the polymer layer being in direct contact with the flange surface, **characterized in that** the polymer of the polymer layer (34) is fluoro-rubber.

2. Pipe flange system according to claim 1, wherein the soft material (20) comprises a material selected from the group consisting of graphite, mica, in particular phlogopite mica, aramid fibers, nitrile butadiene rubber, polytetrafluoroethylene, PTFE, expanded polytetrafluoroethylene, ePTFE, and a combination of these materials.

3. Pipe flange system according to claim 1 or 2, wherein the metal layer (32) of the surround (30) is disposed between the soft material (20) of the soft seal (10) and the polymer layer (34).

4. Pipe flange system according to any of the preceding claims, wherein the polymer layer (34) is the outermost layer of the surround (30) of the soft seal (10).

5. Pipe flange system according to any one of the preceding claims, wherein the metal layer (32) comprises stainless steel.

6. Pipe flange system according to any one of the preceding claims, wherein the at least one surround (30) is an inner flared end or an outer flared end.

7. Pipe flange system according to any one of the preceding claims, wherein the at least one surround (30) is made of a composite sheet comprising a metal layer (32) coated with a polymer (34).

8. Use of a pipe flange soft material seal (10) in a pipe flange system, the pipe flange system comprising:
A pipe flange having a flange surface; wherein
the pipe flange soft material seal (10), comprises:
a soft material (20) in the form of a flat ring; and
at least one surround (30), the surround (30) comprising a metal composite material comprising a metal layer (32) and a polymer layer (34), the polymer layer being in direct contact with the flange surface, **characterized in that** the polymer of the polymer layer (34) is fluoro-rubber.

## Revendications

1. Système de bride, comprenant :
une bride présentant une face de bride ; et
un joint de bride en matière souple (10), comprenant :
une matière souple (20) ayant la forme d'un anneau aplati ; et
au moins une bordure marginale (30), la bordure marginale (30) comprenant un matériau composite à base de métal qui comprend une couche métallique (32) et une couche de polymère (34), ladite couche de polymère étant en contact direct avec ladite face de bride, **caractérisé en ce que** le polymère de la couche de polymère (34) est en caoutchouc fluoré.

2. Système de bride selon la revendication 1, la matière souple (20) comprenant une matière choisie dans le groupe constitué de graphite, de mica, notamment du mica phlogopite, de fibres d'aramide, de caoutchouc nitrile-butadiène, de polytétrafluoroéthylène, PTFE, de polytétrafluoroéthylène expansé, ePTFE et d'une combinaison de ces matières.

3. Système de bride selon les revendications 1 ou 2, la couche métallique (32) de la bordure marginale (30) étant disposée entre la matière souple (20) du joint en matière souple (10) et la couche de polymère (34).

4. Système de bride selon l'une des revendications précédentes, la couche de polymère (34) étant la couche la plus à l'extérieur de la bordure marginale (30) du joint en matière souple (10).

5. Système de bride selon l'une des revendications précédentes, la couche métallique (32) comprenant de l'acier inoxydable.

6. Système de bride selon l'une des revendications précédentes, l'au moins une bordure marginale (30) étant un rebord intérieur ou un rebord extérieur.

7. Système de bride selon l'une des revendications précédentes, l'au moins une bordure marginale (30) étant réalisée en une tôle composite comprenant une couche métallique (32) qui a été revêtu d'un polymère (34) .

8. Utilisation d'un joint de bride en matière souple (10) dans un système de bride, ledit système de bride comprenant :
une bride présentant une face de bride ;
le joint de bride en matière souple (10) comprenant :
une matière souple (20) ayant la forme d'un anneau aplati ; et
au moins une bordure marginale (30), la bordure marginale (30) comprenant un matériau composite à base de métal qui comprend une couche métallique (32) et une couche de polymère (34), ladite couche de polymère étant en contact direct avec ladite face de bride, **caractérisée en ce que** le polymère de la couche de polymère (34) est en caoutchouc fluoré.
